# EUROPEAN PATENT APPLICATION

(11) **EP 4 678 395 A1**
(43) Date of publication of application: **14.01.2026**
(21) Application number: 25761404.0
(22) Date of filing: 17.02.2025
(51) Int. Cl.: B32B 18/00, B32B 27/28

(54) **MEMBER, METHOD FOR MANUFACTURING MEMBER, AND SEMICONDUCTOR MANUFACTURING-RELATED DEVICE**

(30) Priority: 28.02.2024 JP 2024028869; 03.06.2024 JP 2024090021
(71) Applicant: Daikin Industries, Ltd., Osaka-shi, Osaka 530-0001 (JP)
(72) Inventor: OKUNO, Shingo, Osaka-Shi, Osaka 530-0001 (JP); TANAKA, Yuhei, Osaka-Shi, Osaka 530-0001 (JP); KISHIKAWA, Yosuke, Osaka-Shi, Osaka 530-0001 (JP)
(74) Representative: Hoffmann Eitle
(86) International application number: PCT/JP2025/005216
(87) International publication number: WO 2025/182645

(57) **Abstract**

The disclosure aims to provide a member excellent in chemical resistance, a method for manufacturing the same, and a semiconductor manufacturing-related apparatus. Provided is a member including: a material (a) with a surface at least partially laminated with an insulating material. The member includes at least one selected from the group consisting of an architectural finishing material member, a mobility member, an aerospace member, a semiconductor member, and an information and communication member.

## Description

### TECHNICAL FIELD

The disclosure relates to members, methods for producing members, and semiconductor manufacturing-related apparatuses.

### BACKGROUND ART

Techniques for coating a substrate to improve corrosion resistance in a semiconductor manufacturing apparatus and the like have been proposed (see, for example, Patent Literatures 1 to 3).

### CITATION LIST

### - Patent Literature

Patent Literature 1: WO 2010/053687
Patent Literature 2: JP 2013-63904 A
Patent Literature 3: JP 2018-40058 A

### SUMMARY OF INVENTION

### - Technical Problem

The disclosure aims to provide a member excellent in chemical resistance, a method for producing the same, and a semiconductor manufacturing-related apparatus.

### - Solution to Problem

The disclosure (1) relates to a member including a material (a) with a surface at least partially laminated with an insulating material,
the member including at least one selected from the group consisting of an architectural finishing material member, a mobility member, an aerospace member, a semiconductor member, and an information and communication member.

The disclosure (2) relates to the member according to the disclosure (1), wherein the insulating material is a ceramic material.

The disclosure (3) relates to the member according to the disclosure (2), wherein the ceramic material includes at least one selected from the group consisting of alumina, aluminosilicate, silicon carbide, silica, zirconia, cobalt oxide, and organopolysiloxane.

The disclosure (4) relates to the member according to the disclosure (2), wherein the ceramic material includes at least one selected from the group consisting of alumina and organopolysiloxane.

The disclosure (5) relates to the member according to any one of the disclosures (2) to (4), wherein the ceramic material has a purity of 50% by mass or higher.

The disclosure (6) relates to the member according to any one of the disclosures (1) to (5), wherein the material (a) includes at least one selected from the group consisting of resin, rubber, metal, and ceramic.

The disclosure (7) relates to the member according to any one of the disclosures (1) to (6), wherein the material (a) includes at least one selected from the group consisting of resin and rubber.

The disclosure (8) relates to the member according to any one of the disclosures (1) to (7), wherein the material (a) includes at least one selected from the group consisting of a polyether ether ketone resin and polyphenylene sulfide.

The disclosure (9) relates to the member according to any one of the disclosures (1) to (8), wherein the material (a) has a 1% mass reduction by thermal decomposition, at a temperature of 560°C or lower.

The disclosure (10) relates to the member according to any one of the disclosures (1) to (9), wherein the insulating material constitutes a coating having a thickness of 0.1 to 500 µm.

The disclosure (11) relates to the member according to any one of the disclosures (1) to (10), wherein the insulating material constitutes a coating having a thickness of 10 to 100 µm.

The disclosure (12) relates to the member according to any one of the disclosures (1) to (11), wherein the member includes at least one selected from the group consisting of a piping material, a nozzle, a tube, a tank, a container, a joint, a valve, a pump, a spin chuck, an O-ring, a packing, a gasket, a washer, and a sealing material.

The disclosure (13) relates to the member according to any one of the disclosures (1) to (12), wherein the member is a semiconductor manufacturing-related apparatus.

The disclosure (14) relates to the member according to the disclosure (13), wherein the semiconductor manufacturing-related apparatus is an apparatus in which a chemical is used.

The disclosure (15) relates to the member according to the disclosure (14), wherein the chemical includes at least one selected from the group consisting of TMAH ([(CH₃)₄N]⁺[OH]⁻), sulfuric acid, isopropyl alcohol, hydrofluoric acid, a mixed acid of hydrofluoric acid and nitric acid, a sulfuric acid hydrogen peroxide mixture (SPM), SC1 (a mixture of NH₄OH, H₂O₂, and H₂O), SC2 (a mixture of HCl, H₂O₂, and H₂O), phosphoric acid, and hydrochloric acid.

The disclosure (16) relates to the member according to the disclosure (14), wherein the chemical includes at least one selected from the group consisting of a silicon-based gas, an arsenic-based gas, a phosphorus-based gas, a boron-based gas, a metal hydride gas, a metal alkyl gas, a halogenated hydrocarbon gas, a halogen-halide gas, a nitrogen oxide gas, hydrogen sulfide gas, ammonia gas, trimethylamine gas, propane gas, trimethylaluminum gas, hydrogen gas, helium gas, nitrogen gas, oxygen gas, argon gas, and carbon dioxide gas.

The disclosure (17) relates to the member according to any one of the disclosures (14) to (16), wherein the member for a semiconductor manufacturing-related apparatus has a surface that comes into contact with the chemical, at least partially laminated with the insulating material.

The disclosure (18) relates to the member according to any one of the disclosures (13) to (17), wherein the member for a semiconductor manufacturing-related apparatus is for a semiconductor manufacturing-related apparatus in which a chemical is used, and has a surface that comes into contact with the chemical, at least partially laminated with the insulating material.

The disclosure (19) relates to the member according to any one of the disclosures (1) to (18), wherein the member has a mass change rate of 50.0% by mass or less in the following chemical resistance evaluation:
(Chemical resistance evaluation)
a test piece including the member (a test piece including the material (a) with a surface entirely laminated with a coating including the insulating material, size of the material (a): 10 mm × 50 mm × 2 mm or 10 mm × 50 mm × 6 mm, thickness of the coating: 30 µm) is dried at 60°C for two hours;
after drying, the mass of the test piece before immersion is measured at room temperature (20°C);
the test piece after the measurement is completely immersed in a mixed acid of hydrofluoric acid and nitric acid (hydrofluoric acid concentration 50%, nitric acid concentration 60%) having a concentration ratio (molar ratio) of hydrofluoric acid to nitric acid of 1:5, and held at room temperature (20°C) for one week (168 hours);
the test piece after the holding is washed with pure water, wiped to remove water droplets on a surface, and dried at 60°C for 12 hours; the mass of the test piece after the immersion is measured at room temperature (20°C); and
the mass change rate (%) is calculated from the masses measured before and after the immersion.

The disclosure (20) relates to a method for producing the member according to any one of the disclosures (1) to (19), the method including: producing the member at a temperature equal to or lower than a temperature at which the material (a) has a 1% mass reduction by thermal decomposition.

The disclosure (21) relates to the method for producing the member according to the disclosure (20), the method further including: laminating a surface of the material (a) with the insulating material; and drying the insulating material.

The disclosure (22) relates to a semiconductor manufacturing-related apparatus including the member according to any one of the disclosures (1) to (19) mounted thereon.

The disclosure (23) relates to the semiconductor manufacturing-related apparatus according to the disclosure (22), which includes at least one selected from the group consisting of a semiconductor manufacturing apparatus and a semiconductor manufacturing apparatus-related apparatus.

The disclosure (24) relates to the semiconductor manufacturing-related apparatus according to the disclosure (23), wherein the semiconductor manufacturing apparatus includes at least one selected from the group consisting of a photolithography process apparatus, a thin film formation/etching/cleaning/drying apparatus, an inspection/evaluation and manufacturing apparatus, a resist processing apparatus, an etching apparatus, a cleaning/drying apparatus, a CVD apparatus, a thin film formation apparatus, a CMP apparatus, a processing apparatus, an aging apparatus, and an inspection apparatus; and
the semiconductor manufacturing apparatus-related apparatus includes at least one selected from the group consisting of a pure water/chemical liquid apparatus, a gas apparatus, a clean room apparatus, and a manufacturing-related apparatus.

The disclosure (25) relates to the semiconductor manufacturing-related apparatus according to the disclosure (24), wherein the photolithography process apparatus includes at least one selected from the group consisting of a coating apparatus, a resist stripping apparatus, a developing apparatus (developer), and a descumming apparatus;
the thin film formation/etching/cleaning/drying apparatus includes at least one selected from the group consisting of a vacuum deposition apparatus, a cleaning apparatus, a drying apparatus, and a scrub cleaning apparatus;
the inspection/evaluation and manufacturing apparatus is a defect repair apparatus,
the resist processing apparatus includes at least one selected from the group consisting of a coating apparatus, a developing apparatus, a resist stripping apparatus, and an ashing apparatus;
the etching apparatus includes at least one selected from the group consisting of a dry etching apparatus and a wet etching apparatus;
the cleaning/drying apparatus includes at least one selected from the group consisting of a wet cleaning apparatus, a scrub cleaning apparatus, and a drying apparatus;
the CVD apparatus includes at least one selected from the group consisting of a high-pressure CVD apparatus, a SACVD apparatus, a low-pressure CVD apparatus, a plasma CVD apparatus, a metal CVD apparatus, and an ALD apparatus;
the thin film formation apparatus includes at least one selected from the group consisting of a vacuum deposition apparatus, a silicon epitaxial growth apparatus, a compound semiconductor epitaxial apparatus (MOCVD apparatus, MBE apparatus), and a plating apparatus;
the CMP apparatus includes at least one selected from the group consisting of a CMP apparatus and a CMP cleaning apparatus;
the processing apparatus is a bump plating apparatus;
the aging apparatus includes at least one selected from the group consisting of an aging apparatus, a burn-in apparatus, an IC insertion apparatus, and an IC extraction apparatus;
the inspection apparatus is a life test apparatus,
the pure water/chemical liquid apparatus includes at least one selected from the group consisting of a chemical supply apparatus, a slurry supply apparatus, a chemical purification apparatus, and a waste liquid treatment apparatus;
the gas apparatus includes at least one selected from the group consisting of a gas generation apparatus, a gas purification apparatus, a gas mixing apparatus, a gas detection apparatus, and an exhaust gas treatment apparatus;
the clean room apparatus includes at least one selected from the group consisting of a thermal chamber and an environmental test apparatus; and
the manufacturing-related apparatus includes at least one selected from the group consisting of a jig cleaning/drying apparatus, a flow control instrument, a packaging apparatus, and a liquid/gas measuring instrument.

### - Advantageous Effects of Invention

The disclosure can provide a member excellent in chemical resistance, a method for producing the same, and a semiconductor manufacturing-related apparatus.

### DESCRIPTION OF EMBODIMENTS

The disclosure is described in detail below.

The disclosure relates to a member including a material (a) with a surface at least partially laminated with an insulating material,
the member including at least one selected from the group consisting of an architectural finishing material member, a mobility member, an aerospace member, a semiconductor member, and an information and communication member.
The member of the disclosure has excellent chemical resistance.

The member of the disclosure has a surface at least partially laminated with an insulating material.

The material (a) is not limited, and any known organic or inorganic material can be used. Specific examples thereof include resin, rubber, metal, and ceramic. The material (a) is preferably an organic material. The material (a) preferably includes at least one selected from the group consisting of resin, rubber, metal, and ceramic, more preferably includes at least one selected from the group consisting of resin and rubber.

The resin is not limited, and any known resin can be used. Examples thereof include a polyolefin resin, a polyester resin, a polyamide (PA) resin, and a fluororesin. A heat-resistant resin such as an engineering plastic resin and a super engineering plastic resin can also be suitably used.

In order to improve the adhesion to an insulating material, the resin is preferably a fluorine-free resin (a resin that does not contain fluorine) or a heat-resistant resin, more preferably a heat-resistant resin that does not contain fluorine.

The heat-resistant resin may be any resin that is generally recognized to have heat resistance. Still, a heat-resistant resin other than a fluorine-containing ethylenic polymer (an ethylenic polymer that contains fluorine) is preferably used.

The term "heat-resistant" herein means the property with which the resin can be continuously used at a temperature of 150°C or higher.

Examples of the heat-resistant resin include a polyamideimide resin (PAI), a polyimide resin (PI), a polyethersulfone resin (PES), a polyetherimide resin, an aromatic polyether ketone resin (PAEK), an aromatic polyester resin, and a polyarylene sulfide resin (PAS). One of these may be used alone or two or more of these may be used in combination.

PAI is a resin including a polymer containing an amide bond and an imide bond in its molecular structure. Any PAI may be used, and examples thereof include resins including a high-molecular-weight polymer obtained by any of the following reactions: a reaction between an aromatic diamine containing an amide bond in the molecule and an aromatic tetravalent carboxylic acid (e.g., pyromellitic acid); a reaction between an aromatic trivalent carboxylic acid (e.g., trimellitic anhydride) and a diamine (e.g., 4,4-diaminophenyl ether) or a diisocyanate (e.g., diphenylmethane diisocyanate); and a reaction between a dibasic acid containing an aromatic imide ring in the molecule and a diamine. In order to achieve excellent heat resistance, the PAI preferably includes a polymer containing an aromatic ring in the main chain. Characteristics of PAI include high heat stability, abrasion resistance, and creep resistance with which the material is less likely to deform under application of a load. In addition, PAI is thermoplastic and has excellent melt fabricability, and can be molded by extrusion or compression molding. The melt flow rate (MFR) is preferably in the range of 10 to 80 g/10 min.

PI is a resin including a polymer containing an imide bond in its molecular structure. Any PI may be used, and examples thereof include resins including a high-molecular-weight polymer obtained by a reaction such as a reaction of an aromatic tetravalent carboxylic anhydride (e.g., pyromellitic anhydride). In order to achieve excellent heat resistance, the PI preferably includes a polymer containing an aromatic ring in the main chain. Characteristics of PI include high heat resistance, insulating properties, low dielectric constant, low dielectric loss, and radiation resistance. PI is classified into non-thermoplastic polyimides, thermoplastic polyimides, thermosetting polyimides, and soluble polyimides. The melt flow rate (MFR) is preferably in the range of 0.1 to 50 g/10 min.

PES is a resin including a polymer containing a repeating unit represented by the following formula:

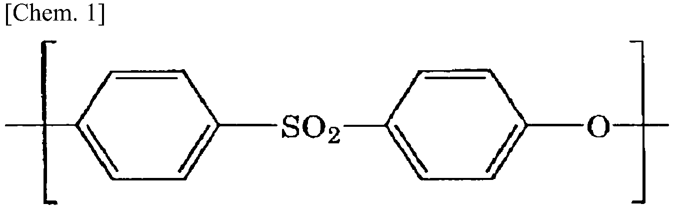

Any PES can be used, and examples thereof include a resin including a polymer obtained by polycondensation of dichlorodiphenylsulfone and bisphenol. PES is a highly heat-resistant non-crystalline plastic with a glass transition temperature (Tg) of 225°C. In addition to high heat resistance, PES has other excellent properties such as dimensional stability, high fluidity, and flame retardancy, and is used in a wide range of industrial fields, such as housings for electrical and electronic parts and automotive parts. The melt flow rate (MFR) is preferably in the range of 5 to 60 g/10 min.

The aromatic polyether ketone resin is a resin containing a repeating unit composed of an arylene group, an ether group [-O-], and a carbonyl group [-C(=O)-]. Examples of the aromatic polyether ketone resin include a polyether ketone resin (PEK), a polyether ether ketone resin (PEEK), a polyether ketone ketone resin (PEKK), a polyether ether ketone ketone resin (PEEKK), and a polyether ketone ester resin. One aromatic polyether ketone resin may be used alone or two or more thereof may be used in combination.

The aromatic polyether ketone resin preferably includes at least one selected from the group consisting of PEK, PEEK, PEKK, PEEKK, and a polyether ketone ester resin, more preferably at least one selected from the group consisting of PEEK and PEKK, more preferably PEEK. PEEK has a high continuous use temperature of 260°C and has excellent properties including heat resistance, hot water resistance, flame retardancy, mechanical properties, and electrical properties, and is used in the aerospace, automotive, medical instrument, 3D printer, food, and semiconductor fields. The melt flow rate (MFR) is preferably in the range of 1 to 20 g/10 min.

PAS is a resin including a polymer containing a repeating unit represented by the following formula:

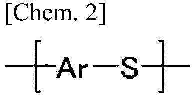

wherein Ar is an arylene group. The PAS is not limited, and examples thereof include polyphenylene sulfide (PPS). PPS is a thermoplastic resin with a normal heat resistance temperature of 220°C to 240°C and a cold resistance down to -20°C. PPS has excellent fatigue and creep properties, as well as good weather resistance and hydrolysis resistance. PPS is a flame-retardant material even without the addition of flame retardants, and also has heat shock resistance. PPS also has good moldability, allowing a high degree of freedom in the shape of the molded article. This allows PPS to be used for connectors, various electronic parts, and automotive parts in the electrical and electronic parts field. The melt flow rate (MFR) is preferably in the range of 10 to 50 g/10 min.

The heat-resistant resin preferably includes at least one selected from the group consisting of PAI, PI, PES, an aromatic polyether ketone resin, and PAS, more preferably at least one selected from the group consisting of an aromatic polyether ketone resin and PAS, still more preferably an aromatic polyether ketone resin.

The rubber may be either a fluororubber or a non-fluororubber (rubber that does not contain fluorine). Specific examples of the rubber include fluororubber, acrylonitrile-butadiene rubber (NBR) or its hydrogenated product (HNBR), styrenebutadiene rubber (SBR), chloroprene rubber (CR), butadiene rubber (BR), natural rubber (NR), isoprene rubber (IR), cyclopentene rubber (CPR), and other diene rubbers, ethylene-propylene-termonomer copolymer rubber, silicone rubber, butyl rubber, epichlorohydrin rubber, acrylic rubber, chlorinated polyethylene (CPE), chlorosulfonated ethylene rubber (CSM), polyblend of acrylonitrile-butadiene rubber and vinyl chloride (PVC-NBR), ethylene propylene diene rubber (EPDM), and ethylene propylene rubber (EPM). In order to improve adhesion to an insulating material, a non-flouororubber is preferred among these.

The metal is not limited, and any known metal can be used, including iron, steel, non-ferrous metals, and the like. For example, examples of steel include SPC material, SS material, SC material, SK material, stainless steel, high chromium molybdenum, high tensile steel, white cast iron, gray cast iron, and spheroidal graphite cast iron. Examples of non-ferrous metals include aluminum and aluminum alloys, copper and copper alloys, zinc and zinc alloys, titanium and titanium alloys, magnesium and magnesium alloys, and nickel and nickel alloys.

The ceramic is not limited, and any known ceramic can be used. Examples include alumina, zirconia, aluminum nitride, silicon carbide, silicon oxide, silicon nitride, forsterite, steatite, cordierite, sialon, machinable ceramics, barium titanate, lead zirconate, ferrite, and mullite.

Characteristics of alumina include excellent electrical insulation, heat resistance, abrasion resistance, and mechanical strength, as well as relatively high thermal conductivity. Such alumina is a highly versatile material.

Characteristics of zirconia include excellent thermal properties including a high melting point of 2700°C, a high maximum operating temperature of approximately 1200°C, and a high thermal shock resistance of Δ400°C. The thermal conductivity of zirconia is significantly lower than those of other ceramics.

Aluminum nitride is a material exhibiting extremely high thermal conductivity, excellent in heat dissipation, insulation, and thermal shock resistance, and is used as a substrate material. Aluminum nitride substrates can be metallized.

Characteristics of silicon carbide include extremely high chemical and physical stability and high hardness. Compared to other ceramics, silicon carbide has extremely high thermal conductivity and is semi-conductive.

Characteristics of silicon oxide include excellent heat resistance and thermal shock resistance. The Vickers hardness of silicon oxide is 8.6 to 9.8 GPa.

Characteristics of silicon nitride include a low coefficient of thermal expansion and chemical stability. Also owing to excellent abrasion resistance and electrical insulation properties, silicon nitride is used in a very wide range of industrial fields.

Forsterite is used as a heat insulating material and exhibits high insulation resistance, which makes forsterite widely used as an electrical insulating material. Forsterite has a dielectric constant of 6.5 and a low dielectric loss tangent (Tan δ), which makes forsterite useful as a high-frequency insulating material.

Characteristics of steatite include a low high-frequency loss, high insulation resistance at high temperatures, and high mechanical strength.

Characteristics of cordierite include crystal expansion in the radial direction and contraction in the axial direction upon heating.

Characteristics of sialon include excellent heat resistance, mechanical strength in high-temperature environments, thermal shock resistance, and abrasion resistance, as well as low thermal expansion, high rigidity, and excellent corrosion resistance.

Machinable ceramics are easy to cut and suitable for fine and precision machining. Since machinable ceramics have few pores, outgassing or helium permeation is minimized, allowing them to exhibit stable performance even in a vacuum.

Characteristics of barium titanate include an extremely high dielectric constant. Barium titanate is widely used as a dielectric material in, for example, multilayer ceramic capacitors. Barium titanate also has an extremely high refractive index, and is also used as an optical material.

Characteristics of lead zirconate include a high piezoelectric charge coefficient, a medium dielectric constant, and a high coupling coefficient.

Ferrite is a magnetic material that can provide a strong magnet, is less electrically conductive than metallic magnetic materials, and is resistant to rust and chemicals because it is a baked oxide (porcelain).

Characteristics of mullite include excellent heat resistance, impact resistance, and abrasion resistance, and it can be produced at relatively low cost.

In order to increase the effect of lamination with an insulating material, preferred among the above ceramics are zirconia, aluminum nitride, silicon oxide, forsterite, steatite, cordierite, and sialon, with zirconia, aluminum nitride, and silicon oxide being particularly preferred.

The material (a) preferably has a 1% mass reduction by thermal decomposition, at a temperature (hereinbelow, also referred to as a 1% thermal decomposition temperature) of 560°C or lower.

In order to improve chemical resistance, the upper limit of the 1% thermal decomposition temperature is more preferably 500°C, still more preferably 450°C. The lower limit is not limited. Still, the lower limit is preferably 150°C, more preferably 200°C, still more preferably 250°C.

The 1% thermal decomposition temperature is measured using a thermal analyzer STA7200 available from Hitachi High-Tech Science Corporation. The measurement is carried out under a nitrogen-purged atmosphere at 200 mL/min. A sample in an amount of 10 mg is placed in an aluminum pan and kept at 25°C for 10 minutes, and then heated to 600°C at a temperature-increasing rate of 10°C/min. The temperature at which the mass is reduced by 1% from the initial mass is defined as the 1% thermal decomposition temperature.

The material (a) may be degreased as a pre-cleaning to enhance adhesion, without any limitation. Preferably, the material (a) is wiped with ethanol or isopropyl alcohol or subjected to ultrasonic cleaning. The surface of the material (a) is preferably subjected to, as a pretreatment, roughening by a sandblasting method or the like, a chemical conversion treatment such as alumite treatment, or a plasma treatment or corona treatment. The surface of the material (a) is particularly preferably subjected to a plasma treatment or corona treatment.

In order to enhance adhesion, any known material may be used in the surface treatment of the material (a), without any limitation. Specifically, the treatment can be performed using a silane coupling agent containing a reactive functional group, such as an epoxy silane, an amino silane, an isocyanate silane, a vinyl silane, an acrylic silane, or a hydrophobic silane (e.g., alkyl silane, phenyl silane, fluorinated alkyl silane).

Examples of the silane coupling agent include epoxy silanes such as γ-glycidoxypropyltriethoxysilane and β-(3,4-epoxycyclohexyl)ethyltrimethoxysilane, amino silanes such as aminopropyltriethoxysilane and N-phenylaminopropyltrimethoxysilane, isocyanate silanes such as 3-isocyanatepropyltrimethoxysilane, vinyl silanes such as vinyltrimethoxysilane, and acrylic silanes such as acryloxytrimethoxysilane, with 3-aminopropyltriethoxysilane, vinyltrimethoxysilane, and 3-methacryloxypropyltriethoxysilane being preferred.

Non-limiting examples of the insulating material include ceramic materials, glass composites, glass-epoxy materials, and glass-polyimide materials. One insulating material may be used alone or two or more insulating materials may be used in combination. In order to improve chemical resistance, ceramic materials are preferred among the above insulating materials.

A known ceramic material may be used. Examples thereof include metal carbides, metal nitrides, metal oxides, metal silicates, and organopolysiloxanes (organosiloxane condensates).

Examples of the metal carbides include silicon carbide (SiC), tungsten carbide (WC), molybdenum carbide (MO₂C), titanium carbide (TiC), tantalum carbide (TaC), niobium carbide (NbC), vanadium carbide (VC), and zirconium carbide (ZrC). Preferred among these is silicon carbide.

Examples of the metal nitrides include silicon nitride (Si₃N₄), aluminum nitride (AlN), boron nitride (BN), titanium nitride (TiN), titanium aluminum nitride (TiAlN), and chromium nitride (CrN). Preferred among these are aluminum nitride and titanium aluminum nitride.

Examples of the metal oxides include alumina (Al₂O₃), silica (SiO₂), zirconia (ZrO₂), cobalt oxide (CoO, CO₂CO₃, CO₃O₄), zinc oxide (ZnO), tin oxide (SnO₂), titania (TiO₂), and indium oxide (In₂O₃). Preferred among these are alumina, silica, zirconia, and cobalt oxide, and more preferred is alumina.

Examples of the metal silicates include calcium silicate, zinc silicate, aluminum silicate, aluminum orthosilicate, aluminosilcate, borosilicate, beryllosilicate, calcium aluminum silicate, sodium aluminum silicate, beryllium aluminum silicate, sodium silicate, calcium orthosilicate, calcium metasilicate, sodium calcium silicate, zirconium silicate, magnesium orthosilicate, magnesium metasilicate, manganese silicate, and barium silicate. Preferred among these is aluminosilicate.

The organopolysiloxanes (organosiloxane condensates) herein refer to compounds containing a siloxane bond (-Si-O-Si-O-Si-) as a skeleton and having an organic group bonded to any of the silicon atoms in the siloxane bond.

In the organic group, the atom bonded to the silicon atom is preferably a carbon atom.

Atoms or groups other than organic groups (e.g., hydrogen atoms, hydroxy groups, hydrolyzable groups) may be bonded to some of the silicon atoms.

The hydrolyzable group refers to a group which may be reacted with water into a hydroxy group. Examples thereof include a halogen atom (e.g., chlorine atom), an alkoxy group, an acyl group, and an amino group.

The organic group is preferably a hydrocarbon group, more preferably an aromatic hydrocarbon group or a saturated aliphatic hydrocarbon group. The hydrocarbon group, aromatic hydrocarbon group, and saturated aliphatic hydrocarbon group each may further contain a substituent. Examples of the substituent include a halogen atom, an alkoxy group, an aryloxy group, and a group containing a radical polymerizable group described above.

Examples of the organopolysiloxanes include a linear organopolysiloxane and a branched organopolysiloxane.

The linear organopolysiloxane is a linear polymer with a main chain composed of R₂SiO units, in which an organic functional group is introduced into at least one of the R₂ groups. Specific examples of R₂ include alkenyl groups such as vinyl, aryl, butenyl, hexenyl, octenyl, (meth)acryloyloxyethyl, (meth)acryloyloxymethyl, cyclohexenylethyl, and vinyloxypropyl groups and a hydrogen group.

The branched organopolysiloxane is a polymer having a three-dimensional network structure (resin structure) including one or more units represented by R1ₐSiO_{(4-a)/2} in the molecule. Specific examples include an organopolysiloxane (MQ resin) composed of a monofunctional unit (M unit) represented by Rl₃SiO_{1/2} and a Q unit represented by SiO_{4/2}, an organopolysiloxane (MTQ resin) composed of an M unit, a T unit represented by R1 SiO_{3/2}, and a Q unit, an organopolysiloxane (MDQ resin) composed of an M unit, a difunctional unit (D unit) represented by R1₂SiO_{2/2}, and a Q unit, an organopolysiloxane (MDTQ resin) composed of an M unit, a D unit, a T unit, and a Q unit, and an organopolysiloxane (T resin) consisting of a T unit.

The R1 may be, for example, a substituted or non-substituted monovalent hydrocarbon group or a substituted or non-substituted alkoxy group. Specific examples of the monovalent hydrocarbon group include alkyl groups such as a methyl group, an ethyl group, a propyl group, a butyl group, a pentyl group, an isopropyl group, an isobutyl group, a cyclopentyl group, and a cyclohexyl group; alkenyl groups such as a vinyl group, an aryl group, and a hexenyl group; aryl groups such as a phenyl group and a naphthyl group; halogenated alkyl groups such as a 3-chloropropyl group, a 3,3,3-trifluoropropyl group, and a nonafluorobutyl ethyl group; halogenated aryl groups such as a 4-chlorophenyl group, a 3,5-dichlorophenyl group, and a 3,5-difluorophenyl group; and halogenated alkyl group-substituted aryl groups such as a 4-chloromethyl phenyl group and a 4-trifluoromethyl phenyl group. Examples of alkoxy groups include a methoxy group, an ethoxy group, a propoxy group, a butoxy group, and an isopropoxy group.

The ceramic material preferably has an average particle size of 10 to 10000 nm.

The lower limit of the average particle size is more preferably 50 nm, still more preferably 100 nm.

The upper limit of the average particle size is more preferably 8000 nm, still more preferably 5000 nm.

The average particle size of the ceramic material is a value measured by dynamic light scattering.

The ceramic material preferably has a purity of 50% by mass or higher.

The lower limit of the purity of the ceramic material is more preferably 60% by mass or higher, still more preferably 70% by mass or higher, further preferably 80% by mass or higher, even more preferably 90% by mass or higher, even further preferably 93% by mass or higher, particularly preferably 95% by mass or higher, most preferably 98% by mass or higher.

The upper limit of the purity of the ceramic material is not limited, and may be 100% by mass.

The purity of the ceramic material herein refers to the purity of the ceramic component in the insulating material.

The purity of the ceramic material is a value measured by the following method.

A mixed acid (nitric acid, hydrofluoric acid, sulfuric acid) is added to a sample (ceramic material) in a pressure decomposition vessel, and the mixture was heated to carry out pressurized acid digestion.

The resulting digested solution is processed and quantified using an ICP-mass spectrometer.

The member of the disclosure is for use as at least one selected from the group consisting of an architectural finishing material member, a mobility member, an aerospace member, a semiconductor member, and an information and communication member. From the viewpoint of excellent chemical resistance, the member is preferably a semiconductor member, more preferably a member for a semiconductor manufacturing-related apparatus (an article for a semiconductor manufacturing apparatus).

Examples of the architectural finishing material member include architectural interior finishing materials such as baseboards, ceiling materials, and plumbing materials, and architectural exterior finishing materials such as waterproof sheets, waterproofing materials, exterior wall materials, and roofing materials.

Examples of the mobility member include parts used in ferries, trains, automobiles, motorcycles, drones, robots, etc.

Examples of the aerospace member include exterior and interior materials for aircraft, rockets, etc., wire covering members, cable protection members, jet engines, cabin interior materials, and parts thereof.

Examples of the semiconductor member include process materials used in semiconductor manufacturing, and parts for a semiconductor manufacturing-related apparatus.

Examples of the information and communication member include parts of apparatuses such as wireless LAN transmitting and receiving circuits, circuit boards, and parts of apparatuses for optical communication.

The member of the disclosure can be suitably applied to at least one selected from the group consisting of piping materials, nozzles, tubes, tanks, containers, joints, valves, pumps, spin chucks, O-rings, packings, gaskets, washers, and sealing materials because these all require chemical resistance. In particular, the member of the disclosure can be suitably used for the above-mentioned piping materials, nozzles, tubes, and the like in a semiconductor manufacturing apparatus.

The piping material is not limited. Examples of the shape of the material include a robust pipe, a flexible hose that can be fitted to the installation space, and a bellows pipe that is large in diameter but can be bent. The inside of the piping material may be highly polished so as not to generate dust or disturb a liquid or gas flow.

The nozzle is not limited. The tip of the nozzle may be precisely machined to match the size and shape of the part. In addition, since the nozzle comes into contact with another part, a highly hard and durable material that is resistant to friction and bending can be used.

The tube is not limited. The tube diameter is preferably 2 mm to 400 mm, more preferably 2 mm to 100 mm, particularly preferably 2 mm to 25 mm. Materials having stress crack resistance, chemical resistance, excellent mechanical strength, and cleanliness (low contamination of chemical solutions by extracted ions) are used.

The tank and container are not limited. They may be subjected to precision cleaning (washing with water, immersion in acetic acid, wiping, washing with pure water, etc.) to remove dirt or residue. Packaging after cleaning may be carried out in a clean room or clean booth environment.

The joint and valve are not limited. They are required to be oil-free, particle-free, dead space-free, and external leakage-free, and have a size preferably in the range of 3.2 to 40.0 mm in diameter, more preferably in the range of 3.2 to 12.7 mm in diameter.

The pump is not limited. It may be required to have retractability or flexibility.

The spin chuck is not limited. It may be required to have hardness, corrosion resistance, and dimensional stability, and may be provided with electrical conductivity.

The O-ring and sealing material are not limited. The material thereof may be required to have properties including excellent elasticity, good compression set, high abrasion resistance, excellent heat resistance, resistance to the liquid or gas to be used, and long life. In particular, an O-ring used in a semiconductor manufacturing apparatus is used in harsh chemical environments, such as being exposed to various plasmas, and therefore may be required to have high heat resistance, chemical resistance, and plasma resistance.

The packing and gasket are not limited. They may be required to have a low coefficient of friction and excellent abrasion resistance. They may also be required to have heat resistance, cold resistance, pressure resistance, and chemical resistance to prevent leakage.

The washer is not limited. It may be required to have durability, corrosion resistance, and rust resistance, assuming its use in, for example, a clean room.

Examples of a semiconductor manufacturing apparatus of the semiconductor manufacturing-related apparatus include photolithography process apparatuses (coating apparatuses, resist stripping apparatuses, developing apparatuses (developers), baking apparatuses, descumming apparatuses), thin film formation/etching/cleaning/drying apparatuses (vacuum deposition apparatuses, sputtering apparatuses, CVD apparatuses, cleaning apparatuses, etching apparatuses, drying apparatuses, scrub cleaning apparatuses), inspection/evaluation and manufacturing apparatuses (defect repair apparatuses), wafer processing apparatuses (wafer marking apparatuses), resist processing apparatuses (coating apparatuses, developing apparatuses, resist stripping apparatuses, ashing apparatuses, baking apparatuses), etching apparatuses (dry etching apparatuses, wet etching apparatuses), cleaning/drying apparatuses (dry cleaning apparatuses, wet cleaning apparatuses, scrub cleaning apparatuses, drying apparatuses), heat treatment apparatuses (oxidation apparatuses, diffusion apparatuses, annealing apparatuses), ion implantation apparatuses (high current ion implantation apparatuses, medium current ion implantation apparatuses, high energy ion implantation apparatuses), thin film formation apparatuses, CVD apparatuses (high-pressure CVD apparatuses, SACVD apparatuses, low-pressure CVD apparatuses, plasma CVD apparatuses, metal CVD apparatuses, ALD apparatuses), sputtering apparatuses, other thin film formation apparatuses (vacuum deposition apparatuses, silicon epitaxial growth apparatuses, compound semiconductor epitaxial apparatuses (MOCVD apparatuses, MBE apparatuses), plating apparatuses), inspection/evaluation apparatuses (Auger electron spectroscopy apparatuses), CMP apparatuses (CMP apparatuses, CMP cleaning apparatuses), other processing apparatuses (wafer marking apparatuses, back grinding machines, bump plating apparatuses, back grinder tape applicators, back grinders, back grinder tape peelers), dicing apparatuses (dicing apparatuses, wafer mounting apparatuses), bonding apparatuses (die bonding apparatuses, hybrid bonding apparatuses, wire bonding apparatuses, inner lead bonding apparatuses, outer lead bonding apparatuses, flip chip bonding apparatuses), packaging apparatuses (molding apparatuses, deburring apparatuses, solder processing apparatuses), other testing apparatuses (electron beam testing apparatuses, laser beam testing apparatuses), probing apparatuses (probers), handlers, aging apparatuses (aging apparatuses, burn-in apparatuses, IC insertion apparatuses, IC extraction apparatuses), and other inspection apparatuses (thermal test apparatuses, temperature and humidity test apparatuses, pressure cooker apparatuses, laser processing systems, various life test apparatuses).

Examples of an apparatus related to a semiconductor manufacturing apparatus include various transport apparatuses (intra-process wafer transport apparatuses, interprocess wafer transport apparatuses, stockers), pure water/chemical liquid apparatuses (pure water production apparatuses, ultrafiltration apparatuses, reverse osmosis apparatuses, sterilization apparatuses, chemical supply apparatuses, slurry supply apparatuses, chemical purification apparatuses, waste liquid treatment apparatuses), various gas apparatuses (gas generation apparatuses, gas purification apparatuses, gas mixing apparatuses, gas detection apparatuses, exhaust gas treatment apparatuses), clean room apparatuses (clean benches, clean tunnels, thermal chambers, environmental test apparatuses, air showers, pass boxes), and other manufacturing-related apparatuses (various jig cleaning/drying apparatuses, flow control instruments, various taping apparatuses, various packaging apparatuses, measuring instruments for liquid/various gases).

In order to take advantage of chemical resistant properties achieved by lamination with a ceramic material, preferred examples of a semiconductor manufacturing apparatus include photolithography process apparatuses (coating apparatuses, resist stripping apparatuses, developing apparatuses (developers), descumming apparatuses), thin film formation/etching/cleaning/drying apparatuses (vacuum deposition apparatuses, CVD apparatuses, cleaning apparatuses, etching apparatuses, drying apparatuses, scrub cleaning apparatuses), inspection/evaluation and manufacturing apparatuses (defect repair apparatuses), resist processing apparatuses (coating apparatuses, developing apparatuses, resist stripping apparatuses, ashing apparatuses), etching apparatuses (dry etching apparatuses, wet etching apparatuses), cleaning/drying apparatuses (wet cleaning apparatuses, scrub cleaning apparatuses, drying apparatuses), CVD apparatuses (high-pressure CVD apparatuses, SACVD apparatuses, low-pressure CVD apparatuses, plasma CVD apparatuses, metal CVD apparatuses, ALD apparatuses), other thin film formation apparatuses (vacuum deposition apparatuses, silicon epitaxial growth apparatuses, compound semiconductor epitaxial apparatuses (MOCVD apparatuses, MBE apparatuses), plating apparatuses), CMP apparatuses (CMP apparatuses, CMP cleaning apparatuses), and other processing apparatuses (bump plating apparatuses), aging apparatuses (aging apparatuses, burn-in apparatuses, IC insertion apparatuses, IC extraction apparatuses) and other inspection apparatuses (various life test apparatuses).

Preferred examples of an apparatus related to a semiconductor manufacturing apparatus include pure water/chemical liquid apparatuses (chemical supply apparatuses, slurry supply apparatuses, chemical purification apparatuses, waste liquid treatment apparatuses), various gas apparatuses (gas generation apparatuses, gas purification apparatuses, gas mixing apparatuses, gas detection apparatuses, exhaust gas treatment apparatuses), clean room apparatuses (thermal chambers, environmental test apparatuses), and other manufacturing-related apparatuses (various jig cleaning/drying apparatuses, flow control instruments, various packaging apparatuses, measuring instruments for liquid/various gases).

As described above, the member of the disclosure can be suitably used as a member for a semiconductor manufacturing-related apparatus (an article for a semiconductor manufacturing-related apparatus). Owing to its excellent chemical resistance, the member of the disclosure is more suitably used as a member constituting a semiconductor manufacturing-related apparatus in which a chemical is used.

The chemical is not limited. Examples thereof include chemicals used in semiconductor manufacturing-related apparatuses. One chemical may be used alone or two or more chemicals may be used in combination.

Specific examples of the chemical include at least one selected from the group consisting of TMAH ([(CH₃)₄N]⁺[OH]⁻), sulfuric acid, isopropyl alcohol, hydrofluoric acid, a mixed acid of hydrofluoric acid and nitric acid, a sulfuric acid hydrogen peroxide mixture (SPM), SC1 (a mixture of NH₄OH, H₂O₂, and H₂O), SC2 (a mixture of HCl, H₂O₂, and H₂O), phosphoric acid, and hydrochloric acid. Preferred among these is at least one selected from the group consisting of TMAH ([(CH₃)₄N]⁺[OH]⁻), sulfuric acid, isopropyl alcohol, hydrofluoric acid, a mixed acid of hydrofluoric acid and nitric acid, a sulfuric acid hydrogen peroxide mixture (SPM), SC1 (a mixture of NH₄OH, H₂O₂, and H₂O), SC2 (a mixture of HCl, H₂O₂, and H₂O), phosphoric acid, and hydrochloric acid. More preferred is a mixed acid of hydrofluoric acid and nitric acid or hydrofluoric acid, and still more preferred is a mixed acid of hydrofluoric acid and nitric acid.

The chemical may also include at least one selected from the group consisting of silicon-based gases, arsenic-based gases, phosphorus-based gases, boron-based gases, metal hydride gases, metal alkyl gases, halogenated hydrocarbon gases, halogen-halide gases, nitrogen oxide gases, hydrogen sulfide gas, ammonia gas, trimethylamine gas, propane gas, trimethylaluminum gas, hydrogen gas, helium gas, nitrogen gas, oxygen gas, argon gas, and carbon dioxide gas. The chemical may also preferably include at least one selected from the group consisting of silicon-based gases, arsenic-based gases, phosphorus-based gases, boron-based gases, metal hydride gases, metal alkyl gases, halogenated hydrocarbon gases, halogen-halide gases, nitrogen oxide gases, hydrogen sulfide gas, ammonia gas, trimethylamine gas, propane gas, trimethylaluminum gas, hydrogen gas, helium gas, nitrogen gas, oxygen gas, argon gas, and carbon dioxide gas.

Examples of the silicon-based gases include monosilane, dichlorosilane, trichlorosilane, silicon tetrachloride, silicon tetrafluoride, and disilane.

Examples of the arsenic-based gases include arsine, arsenic (III) fluoride, arsenic (V) fluoride, arsenic (III) chloride, and arsenic (V) chloride.

Examples of the phosphorus-based gases include phosphine, phosphorus (III) fluoride, phosphorus (V) fluoride, phosphorus (III) chloride, phosphorus (V) chloride, and phosphorus oxychloride.

Examples of the boron-based gases include diborane, boron trifluoride, boron trichloride, and boron tribromide.

Examples of the metal hydride gases include hydrogen selenide, monogermane, hydrogen telluride, stibine, and tin hydride.

Examples of the metal alkyl gases include trialkylgallium and trialkylindium.

Examples of the halogenated hydrocarbon gases include tetrafluoromethane, trifluoromethane, difluoromethane, hexafluoropropane, octafluoropropane, and octafluorocyclobutane.

Examples of the halogen-halide gases include fluorine, hydrogen fluoride, chlorine, hydrogen chloride, carbon tetrachloride, hydrogen bromide, sulfur hexafluoride, nitrogen trifluoride, sulfur tetrafluoride, tungsten (VI) fluoride, molybdenum (VI) fluoride, germanium tetrachloride, tin (IV) chloride, antimony (V) chloride, tungsten (VI) chloride, and molybdenum hexachloride.

Examples of the nitrogen oxide gases include nitrogen monoxide, nitrogen dioxide, and dinitrogen monoxide.

Preferred among these are ammonia gas, nitrogen trifluoride, dinitrogen monoxide, monosilane, and octafluorocyclobutane, and more preferred are ammonia gas, nitrogen trifluoride, and dinitrogen monoxide.

In order to ensure chemical resistance, the surface of the member for a semiconductor manufacturing-related apparatus (article for a semiconductor manufacturing-related apparatus) that comes into contact with the chemical is preferably at least partially laminated with the insulating material. More preferably, the surface of the member for a semiconductor manufacturing-related apparatus that comes into contact with the chemical is entirely laminated with the insulating material.

In terms of chemical resistance, the member of the disclosure preferably has a mass change rate of 50.0% by mass or less in the following chemical resistance evaluation.

### (Chemical resistance evaluation)

A test piece including the member (a test piece including the material (a) with a surface entirely laminated with a coating including the insulating material, size of the material (a): 10 mm × 50 mm × 2 mm or 10 mm × 50 mm × 6 mm, thickness of the coating: 30 µm) is dried at 60°C for two hours.

After drying, the mass of the test piece before immersion is measured at room temperature (20°C).

The test piece after the measurement is completely immersed in a mixed acid of hydrofluoric acid and nitric acid (hydrofluoric acid concentration 50%, nitric acid concentration 60%) having a concentration ratio (molar ratio) of hydrofluoric acid to nitric acid of 1:5, and held at room temperature (20°C) for one day (24 hours) or one week (168 hours).

The test piece after the holding is washed with pure water, wiped to remove water droplets on the surface, and dried at 60°C for 12 hours. The mass of the test piece after the immersion is measured at room temperature (20°C).

The mass change rate (%) is calculated from the masses measured before and after the immersion.

The upper limit of the mass change rate is more preferably 30.0% by mass, still more preferably 15.0% by mass, further preferably 5.0% by mass. The lower limit is not limited. Still, 0% by mass is most preferred.

In terms of chemical resistance, the member of the disclosure preferably has a mass change rate of 50.0% by mass or less in the following chemical resistance evaluation.

### (Chemical resistance evaluation)

A test piece including the member (a test piece including the material (a) with a surface entirely laminated with a coating including the insulating material, size of the material (a): 10 mm × 50 mm × 2 mm or 10 mm × 50 mm × 6 mm, thickness of the coating: 30 µm) is dried at 60°C for two hours.

After drying, the mass of the test piece before immersion is measured at room temperature (20°C).

The test piece after the measurement is completely immersed in a mixed acid of hydrofluoric acid and nitric acid (hydrofluoric acid concentration 50%, nitric acid concentration 60%) having a concentration ratio (molar ratio) of hydrofluoric acid to nitric acid of 1:100, and held at room temperature (20°C) for one day (24 hours) or one week (168 hours).

The test piece after the holding is washed with pure water, wiped to remove water droplets on the surface, and dried at 60°C for 12 hours. The mass of the test piece after the immersion is measured at room temperature (20°C).

The mass change rate (%) is calculated from the masses measured before and after the immersion.

The upper limit of the mass change rate is more preferably 30.0% by mass, still more preferably 15.0% by mass, further preferably 5.0% by mass, further particularly preferably 3.0% by mass. The lower limit is not limited. Still, 0% by mass is most preferred.

In terms of chemical resistance, the member of the disclosure preferably has a mass change rate of 50.0% by mass or less in the following chemical resistance evaluation.

### (Chemical resistance evaluation)

A test piece including the member (a test piece including the material (a) with a surface entirely laminated with a coating including the insulating material, size of the material (a): 10 mm × 50 mm × 2 mm or 10 mm × 50 mm × 6 mm, thickness of the coating: 15 µm) is dried at 60°C for two hours.

After drying, the mass of the test piece before immersion is measured at room temperature (20°C).

The test piece after the measurement is completely immersed in TMAH ([(CH₃)₄N]⁺[OH]⁻) (25% concentration) at 80°C and held for one week (168 hours).

The test piece after the measurement is completely immersed in concentrated sulfuric acid (98%) and held at 90°C for one week (168 hours).

The test piece after the holding is washed with pure water, wiped to remove water droplets on a surface, and dried at 60°C for 12 hours. The mass of the test piece after the immersion is measured at room temperature (20°C).

The test piece after the holding is washed with pure water, wiped to remove water droplets on the surface, and dried at 60°C for 12 hours. The mass of the test piece after the immersion is measured at room temperature (20°C).

The mass change rate (%) is calculated from the masses measured before and after the immersion.

The upper limit of the mass change rate is more preferably 5% by mass, still more preferably 1% by mass, further preferably 0.5% by mass. The lower limit is not limited. Still, 0% by mass is most preferred.

The member of the disclosure can be produced by a known lamination method or the like.

For example, a member including the material (a) with a surface at least partially laminated with an insulating material can be produced by a production method including a step of laminating the surface of the material (a) with the insulating material (hereafter, also referred to as laminating step) and a step of drying the insulating material (hereafter, also referred to as drying step).

The laminating step in the production method can be carried out by forming a coating including the insulating material partially or entirely on the surface of the material (a) by a known method.

Specifically, a coating including the insulating material can be formed partially or entirely on the surface of the material (a) by applying a coating material composition containing the insulating material on the material (a), for example.

The coating material composition containing the insulating material may contain other materials that can be blended in coating material compositions. Examples of other materials include common coating material additives such as water, organic solvents, surfactants, pH adjusters, defoamers, pigments (e.g., extender pigments, scale pigments), pigment dispersants, thickening agents, leveling agents, film-forming aids, solid lubricants, precipitation inhibitors, moisture absorbents, surface conditioners, thixotropic agents, viscosity modifiers, anti-gelling agents, ultraviolet absorbers, HALS (light stabilizers), matting agents, plasticizers, anti-flooding agents, anti-skinning agents, scratch inhibitors, anti-corrosive agents, fungicides, antibacterial agents, antioxidants, flame retarders, sagging inhibitors, antistatic agents, silane-coupling agents, carbon black, various reinforcing materials, various extenders, conductive fillers, colloidal silica, and powder of metal such as gold, silver, copper, platinum, or stainless steel.

From the viewpoint of coating workability, the insulating material content of the coating material composition containing the insulating material is preferably 50% by mass or more, more preferably 70% by mass or more, while preferably 100% by mass or less, more preferably 95% by mass or less, still more preferably 90% by mass or less.

The application method (coating method) in the laminating step may be any of various coating methods as in conventional cases. Examples thereof include dipping, spraying, roll coating, doctor blade coating, flow coating, and spin coating.

In the production method, the laminating step is followed by the drying step.

The drying step can be carried out by drying a coating formed in the laminating step by a known method.

The drying conditions in the drying step may be appropriately determined in consideration of the material constituting the coating material composition containing the insulating material.

For example, the drying temperature is preferably room temperature (20°C) to 200°C. The drying time is preferably 5 minutes to 36 hours.

The drying step may be followed by a firing step. Particularly when the material (a) used is the heat-resistant resin, the firing step is preferably carried out from the viewpoint of chemical resistance. The firing conditions may be appropriately determined in consideration of the types of the material (a) and the insulating material.

For example, the firing temperature is preferably 100°C to 400°C, more preferably 150°C to 250°C. The firing time is preferably 5 to 240 minutes, more preferably 10 to 120 minutes.

In production of the member of the disclosure, from the viewpoint of chemical resistance, the member is preferably produced at a temperature equal to or lower than the temperature at which the material (a) has a 1% mass reduction by thermal decomposition. In the production method, for example, the laminating step and the drying step are preferably carried out at a temperature equal to or lower than the temperature at which the material (a) has a 1% mass reduction by thermal decomposition.

From the viewpoint of chemical resistance, the coating including the insulating material in the member of the disclosure preferably has a thickness of 0.1 to 500 µm.

The lower limit of the thickness is more preferably 1 µm, still more preferably 10 µm.

The upper limit of the thickness is more preferably 300 µm, still more preferably 100 µm.

The coating including the insulating material preferably has an insulating material content in the coating (100% by mass) of 90 to 100% by mass.

The lower limit of the content is more preferably 92% by mass, still more preferably 95% by mass.

The upper limit of the content is more preferably 100% by mass, still more preferably 98% by mass.

The semiconductor manufacturing-related apparatus of the disclosure is preferably a semiconductor manufacturing-related apparatus including the member mounted thereon. Use of the member of the disclosure can provide the apparatus with excellent chemical resistance.

The semiconductor manufacturing-related apparatus of the disclosure is preferably the one described above as the semiconductor manufacturing apparatus and related apparatus of the semiconductor manufacturing-related apparatus. Moreover, the semiconductor manufacturing-related apparatus of the disclosure preferably includes at least one selected from the group consisting of semiconductor manufacturing apparatuses and semiconductor manufacturing apparatus-related apparatuses.

The semiconductor manufacturing apparatus preferably includes at least one selected from the group consisting of a photolithography process apparatus, a thin film formation/etching/cleaning/drying apparatus, an inspection/evaluation and manufacturing apparatus, a resist processing apparatus, an etching apparatus, a cleaning/drying apparatus, a CVD apparatus, a thin film formation apparatus, a CMP apparatus, a processing apparatus, an aging apparatus, and an inspection apparatus.

The semiconductor manufacturing apparatus-related apparatus preferably includes at least one selected from the group consisting of a pure water/chemical liquid apparatus, a gas apparatus, a clean room apparatus, and a manufacturing-related apparatus.

The photolithography process apparatus preferably includes at least one selected from the group consisting of a coating apparatus, a resist stripping apparatus, a developing apparatus (developer), and a descumming apparatus.

The thin film formation/etching/cleaning/drying apparatus preferably includes at least one selected from the group consisting of a vacuum deposition apparatus, a cleaning apparatus, a drying apparatus, and a scrub cleaning apparatus.

The inspection/evaluation and manufacturing apparatus is preferably a defect repair apparatus.

The resist processing apparatus preferably includes at least one selected from the group consisting of a coating apparatus, a developing apparatus, a resist stripping apparatus, and an ashing apparatus.

The etching apparatus preferably includes at least one selected from the group consisting of a dry etching apparatus and a wet etching apparatus.

The cleaning/drying apparatus preferably includes at least one selected from the group consisting of a wet cleaning apparatus, a scrub cleaning apparatus, and a drying apparatus.

The CVD apparatus preferably includes at least one selected from the group consisting of a high-pressure CVD apparatus, a SACVD apparatus, a low-pressure CVD apparatus, a plasma CVD apparatus, a metal CVD apparatus, and an ALD apparatus.

The thin film formation apparatus preferably includes at least one selected from the group consisting of a vacuum deposition apparatus, a silicon epitaxial growth apparatus, a compound semiconductor epitaxial apparatus (MOCVD apparatus, MBE apparatus), and a plating apparatus.

The CMP apparatus preferably includes at least one selected from the group consisting of a CMP apparatus and a CMP cleaning apparatus.

The processing apparatus is preferably a bump plating apparatus.

The aging apparatus preferably includes at least one selected from the group consisting of an aging apparatus, a burn-in apparatus, an IC insertion apparatus, and an IC extraction apparatus.

The inspection apparatus is preferably a life test apparatus.

The pure water/chemical liquid apparatus preferably includes at least one selected from the group consisting of a chemical supply apparatus, a slurry supply apparatus, a chemical purification apparatus, and a waste liquid treatment apparatus.

The gas apparatus preferably includes at least one selected from the group consisting of a gas generation apparatus, a gas purification apparatus, a gas mixing apparatus, a gas detection apparatus, and an exhaust gas treatment apparatus.

The clean room apparatus preferably includes at least one selected from the group consisting of a thermal chamber and an environmental test apparatus.

The manufacturing-related apparatus preferably includes at least one selected from the group consisting of a jig cleaning/drying apparatus, a flow control instrument, a packaging apparatus, and a liquid/gas measuring instrument.

It should be appreciated that a variety of modifications and changes in the structure and other details may be made to the aforementioned embodiments without departing from the spirit and scope of the claims.

### EXAMPLES

The disclosure is described in more detail below with reference to examples, but is not limited to these examples.

Physical properties were measured by the following methods.

### <Chemical resistance evaluation 1-1>

In the chemical resistance evaluation 1-1, the chemical resistance to acidic chemicals was evaluated under the test conditions shown in Table 1 by the following method.

A test piece was dried at 60°C for two hours.

After drying, the mass of the test piece before immersion was measured at room temperature (20°C).

The test piece after the measurement was completely immersed in a mixed acid of hydrofluoric acid and nitric acid (hydrofluoric acid concentration 50%, nitric acid concentration 60%) having a concentration ratio (molar ratio) of hydrofluoric acid to nitric acid of 1:5, and held at room temperature (20°C) for one day (24 hours) or one week (168 hours).

The test piece after the holding was washed with pure water, wiped to remove water droplets on the surface, and dried at 60°C for 12 hours. The mass of the test piece after the immersion was measured at room temperature (20°C).

The mass change rate (%) was calculated from the masses measured before and after the immersion.

### <Chemical resistance evaluation 1-2>

In the chemical resistance evaluation 1-2, chemical resistance to acidic chemicals was evaluated under the test conditions shown in Table 1 by the following method.

A test piece was dried at 60°C for two hours.

After drying, the mass of the test piece before immersion was measured at room temperature (20°C).

The test piece after the measurement was completely immersed in a mixed acid of hydrofluoric acid and nitric acid (hydrofluoric acid concentration 50%, nitric acid concentration 60%) having a concentration ratio (molar ratio) of hydrofluoric acid to nitric acid of 1:100, and held at room temperature (20°C) for one day (24 hours) or one week (168 hours).

The test piece after the holding was washed with pure water, wiped to remove water droplets on the surface, and dried at 60°C for 12 hours. The mass of the test piece after the immersion was measured at room temperature (20°C).

The mass change rate (%) was calculated from the masses measured before and after the immersion.

### <Chemical resistance evaluation 2>

In the chemical resistance evaluation 2, chemical resistance to basic chemicals was evaluated under the test conditions shown in Table 1 by the following method.

A test piece was dried at 60°C for two hours.

After drying, the mass of the test piece before immersion was measured at room temperature (20°C).

The test piece after the measurement was completely immersed in TMAH ([(CH₃)₄N]⁺[OH]⁻) (25% concentration) at 80°C and held for one week (168 hours).

The test piece after the holding was washed with pure water, wiped to remove water droplets on the surface, and dried at 60°C for 12 hours. The mass of the test piece after the immersion was measured at room temperature (20°C).

The mass change rate (%) was calculated from the masses measured before and after the immersion.

The materials (a) (substrates) and insulating materials (coating agents) used in the examples and comparative examples are shown below.

### (Material (a))

PEEK: "VICTREX PEEK" available from Victrex plc., shape: 10 mm × 50 mm × 2 mm, 1% thermal decomposition temperature 553°C.

PPS: polyphenylene sulfide, MFR 125 g/10 min, shape: 10 mm × 50 mm × 6 mm, 1% thermal decomposition temperature 473°C.

### (Insulating material)

Coating agent 1: a coating agent containing a ceramic powder (Seracoat 31 available from Audec Corporation, ceramic material type: aluminosilicate, aluminum oxide, and amorphous silica, purity of ceramic material: 55% by mass)
Coating agent 2: a coating agent containing a ceramic powder (N-TAC-XD1 available from Shinagawa Fine Ceramics Co., Ltd., ceramic material type: zirconia, silica, cobalt oxide, organopolysiloxane, purity of ceramic material: 74% by mass)

### Examples 1, 4, 7, and 10

### (Drying alone)

The surface of PEEK was roughened by shot blasting using alumina #24, and then irradiated with atmospheric-pressure plasma. Coating agent 1 was applied to the resulting PEEK at room temperature (20°C) using a paint gun to a target thickness after drying of 30 µm (PEEK was entirely coated). After coating, the workpiece was dried at room temperature (20°C) for one day, whereby a test piece (laminated member) was obtained.

### Examples 2, 5, 8, and 11

### (Drying + Firing)

The surface of PEEK was roughened by shot blasting using alumina #24, and then irradiated with atmospheric-pressure plasma. Coating agent 1 was applied to the resulting PEEK at room temperature (20°C) using a paint gun to a target thickness after drying of 30 µm (PEEK was entirely coated). After coating, the workpiece was dried at room temperature (20°C) for one day and then fired at 180°C for 60 minutes, whereby a test piece (laminated member) was obtained.

### Examples 3, 6, 9, 12, 13, and 14

### (Drying + Firing)

At room temperature (20°C), a primer was applied to PEEK or PPS and dried, and then Coating agent 2 was applied to the resulting PEEK or PPS by dip coating to a target thickness of 30 µm (PEEK or PPS was entirely coated). After coating, the workpiece was dried at normal temperature (25°C) and then fired at 150°C for one hour, whereby a test piece (laminated member) was obtained.

### Example 15

### (Drying alone)

The surface of PPS was roughened by shot blasting using alumina #24, and then irradiated with atmospheric-pressure plasma. Coating agent 1 was applied to the resulting PPS at room temperature (20°C) using a paint gun to a target thickness after drying of 30 µm (PPS was entirely coated). After coating, the workpiece was dried at room temperature (20°C) for one day, whereby a test piece (laminated member) was obtained.

### Example 16

### (Drying + Firing)

The surface of PPS was roughened by shot blasting using alumina #24, and then irradiated with atmospheric-pressure plasma. Coating agent 1 was applied to the resulting PPS at room temperature (20°C) using a paint gun to a target thickness after drying of 30 µm (PPS was entirely coated). After coating, the workpiece was dried at room temperature (20°C) for one day and then fired at 180°C for 60 minutes, whereby a test piece (laminated member) was obtained.

### Comparative Examples 1 to 6

PEEK or PPS was used as a test piece.

**[Table 1]**

| | Substrate type | Coating agent type | Coating thickness (µm) | Chemical resistance evaluation 1-1, 1-2 (Acidic chemical) | | Chemical resistance evaluation 2 (Basic chemical) | |
|---|---|---|---|---|---|---|---|
| | | | | Test conditions | Mass change rate (%) | Test conditions | Mass change rate (%) |
| Example 1 | PEEK | Coating agent 1 (drying alone) | 30 µm | 1 day in HF/HNO3 (RT, 1:5) | 3.3 | 1 week in TMAH | 0.08 |
| Example 2 | PEEK | Coating agent 1 (drying + firing) | 30 µm | 1 day in HF/HNO3 (RT, 1:5) | 2.6 | 1 week in TMAH | 0.06 |
| Example 3 | PEEK | Coating agent 2 (drying + firing) | 30 µm | 1 day in HF/HNO3 (RT, 1:5) | 4.7 | 1 week in TMAH | 0.05 |
| Comparative Example 1 | PEEK | | | 1 day in HF/HNO3 (RT, 1:5) | 6.51 | | |
| Example 4 | PEEK | Coating agent 1 (drying alone) | 30 µm | 1 week in HF/HNO3 (RT, 1:5) | 3.6 | | |
| Example 5 | PEEK | Coating agent 1 (drying + firing) | 30 µm | 1 week in HF/HNO3 (RT, 1:5) | 1.7 | | |
| Example 6 | PEEK | Coating agent 2 (drying + firing) | 30 µm | 1 week in HF/HNO3 (RT, 1:5) | 4.1 | | |
| Comparative Example 2 | PEEK | | | 1 week in HF/HNO3 (RT, 1:5) | 50.8 | | |
| Example 7 | PEEK | Coating agent 1 (drying alone) | 30 µm | 1 day in HF/HNO3 (RT, 1:100) | 2.6 | | |
| Example 8 | PEEK | Coating agent 1 (drying + firing) | 30 µm | 1 day in HF/HNO3 (RT, 1:100) | 2.5 | | |
| Example 9 | PEEK | Coating agent 2 (drying + firing) | 30 µm | 1 day in HF/HNO3 (RT, 1:100) | 3.1 | | |
| Comparative Example 3 | PEEK | | | 1 day in HF/HNO3 (RT, 1:100) | 23.4 | | |
| Example 10 | PEEK | Coating agent 1 (drying alone) | 30 µm | 1 week in HF/HNO3 (RT, 1:100) | 2.7 | | |
| Example 11 | PEEK | Coating agent 1 (drying + firing) | 30 µm | 1 week in HF/HNO3 (RT, 1:100) | 1.3 | | |
| Example 12 | PEEK | Coating agent 2 (drying + firing) | 30 µm | 1 week in HF/HNO3 (RT, 1:100) | 2.4 | | |
| Comparative Example 4 | PEEK | | | 1 week in HF/HNO3 (RT, 1:100) | 100 | | |
| Example 13 | PPS | Coating agent 2 (drying + firing) | 30 µm | 1 day in HF/HNO3 (RT, 1:100) | 27.9 | 1 week in TMAH | 0.06 |
| Comparative Example 5 | PPS | | | 1 day in HF/HNO3 (RT, 1:100) | 52.9 | | |
| Example 14 | PPS | Coating agent 2 (drying + firing) | 30 µm | 1 week in HF/HNO3 (RT, 1:100) | 46.8 | | |
| Comparative Example 6 | PPS | | | 1 week in HF/HNO3 (RT, 1:100) | 87.5 | | |
| Example 15 | PPS | Coating agent 1 (drying alone) | 30 µm | 1 day in HF/HNO3 (RT, 1:5) | 27.2 | | |
| Example 16 | PPS | Coating agent 1 (drying + firing) | 30 µm | 1 day in HF/HNO3 (RT, 1:5) | 21.7 | | |

| | | | | | | | |
|---|---|---|---|---|---|---|---|
| PEEK (10mm×50mm×2mm) PPS (10mm×50mm×6mm) | | | | | | | |

The laminated members of the examples were suitable for use as members (parts) in a semiconductor manufacturing-related apparatus in which a chemical is used.

## Claims

1. A member comprising a material (a) with a surface at least partially laminated with an insulating material,
the member including at least one selected from the group consisting of an architectural finishing material member, a mobility member, an aerospace member, a semiconductor member, and an information and communication member.

2. The member according to claim 1,
wherein the insulating material is a ceramic material.

3. The member according to claim 2,
wherein the ceramic material includes at least one selected from the group consisting of alumina, aluminosilicate, silicon carbide, silica, zirconia, cobalt oxide, and organopolysiloxane.

4. The member according to claim 2,
wherein the ceramic material includes at least one selected from the group consisting of alumina and organopolysiloxane.

5. The member according to any one of claims 2 to 4,
wherein the ceramic material has a purity of 50% by mass or higher.

6. The member according to any one of claims 1 to 5,
wherein the material (a) includes at least one selected from the group consisting of resin, rubber, metal, and ceramic.

7. The member according to any one of claims 1 to 6,
wherein the material (a) includes at least one selected from the group consisting of resin and rubber.

8. The member according to any one of claims 1 to 7,
wherein the material (a) includes at least one selected from the group consisting of a polyether ether ketone resin and polyphenylene sulfide.

9. The member according to any one of claims 1 to 8,
wherein the material (a) has a 1% mass reduction by thermal decomposition, at a temperature of 560°C or lower.

10. The member according to any one of claims 1 to 9,
wherein the insulating material constitutes a coating having a thickness of 0.1 to 500 µm.

11. The member according to any one of claims 1 to 10,
wherein the insulating material constitutes a coating having a thickness of 10 to 100 µm.

12. The member according to any one of claims 1 to 11,
wherein the member includes at least one selected from the group consisting of a piping material, a nozzle, a tube, a tank, a container, a joint, a valve, a pump, a spin chuck, an O-ring, a packing, a gasket, a washer, and a sealing material.

13. The member according to any one of claims 1 to 12,
wherein the member is for a semiconductor manufacturing-related apparatus.

14. The member according to claim 13,
wherein the semiconductor manufacturing-related apparatus is an apparatus in which a chemical is used.

15. The member according to claim 14,
wherein the chemical includes at least one selected from the group consisting of TMAH ([(CH₃)₄N]⁺[OH]⁻), sulfuric acid, isopropyl alcohol, hydrofluoric acid, a mixed acid of hydrofluoric acid and nitric acid, a sulfuric acid hydrogen peroxide mixture (SPM), SC1 (a mixture of NH₄OH, H₂O₂, and H₂O), SC2 (a mixture of HCl, H₂O₂, and H₂O), phosphoric acid, and hydrochloric acid.

16. The member according to claim 14,
wherein the chemical includes at least one selected from the group consisting of a silicon-based gas, an arsenic-based gas, a phosphorus-based gas, a boron-based gas, a metal hydride gas, a metal alkyl gas, a halogenated hydrocarbon gas, a halogen-halide gas, a nitrogen oxide gas, hydrogen sulfide gas, ammonia gas, trimethylamine gas, propane gas, trimethylaluminum gas, hydrogen gas, helium gas, nitrogen gas, oxygen gas, argon gas, and carbon dioxide gas.

17. The member according to any one of claims 14 to 16,
wherein the member for a semiconductor manufacturing-related apparatus has a surface that comes into contact with the chemical, at least partially laminated with the insulating material.

18. The member according to any one of claims 13 to 17,
wherein the member for a semiconductor manufacturing-related apparatus is for a semiconductor manufacturing-related apparatus in which a chemical is used, and has a surface that comes into contact with the chemical, at least partially laminated with the insulating material.

19. The member according to any one of claims 1 to 18,
wherein the member has a mass change rate of 50.0% by mass or less in the following chemical resistance evaluation:
(Chemical resistance evaluation)
a test piece including the member (a test piece including the material (a) with a surface entirely laminated with a coating including the insulating material, size of the material (a): 10 mm × 50 mm × 2 mm or 10 mm × 50 mm × 6 mm, thickness of the coating: 30 µm) is dried at 60°C for two hours;
after drying, the mass of the test piece before immersion is measured at room temperature (20°C);
the test piece after the measurement is completely immersed in a mixed acid of hydrofluoric acid and nitric acid (hydrofluoric acid concentration 50%, nitric acid concentration 60%) having a concentration ratio (molar ratio) of hydrofluoric acid to nitric acid of 1:5, and held at room temperature (20°C) for one week (168 hours);
the test piece after the holding is washed with pure water, wiped to remove water droplets on a surface, and dried at 60°C for 12 hours;
the mass of the test piece after the immersion is measured at room temperature (20°C); and
the mass change rate (%) is calculated from the masses measured before and after the immersion.

20. A method for producing the member according to any one of claims 1 to 19, the method comprising:
producing the member at a temperature equal to or lower than a temperature at which the material (a) has a 1% mass reduction by thermal decomposition.

21. The method for producing the member according to claim 20, the method further comprising:
laminating a surface of the material (a) with the insulating material; and
drying the insulating material.

22. A semiconductor manufacturing-related apparatus comprising the member according to any one of claims 1 to 19 mounted thereon.

23. The semiconductor manufacturing-related apparatus according to claim 22, which includes at least one selected from the group consisting of a semiconductor manufacturing apparatus and a semiconductor manufacturing apparatus-related apparatus.

24. The semiconductor manufacturing-related apparatus according to claim 23,
wherein the semiconductor manufacturing apparatus includes at least one selected from the group consisting of a photolithography process apparatus, a thin film formation/etching/cleaning/drying apparatus, an inspection/evaluation and manufacturing apparatus, a resist processing apparatus, an etching apparatus, a cleaning/drying apparatus, a CVD apparatus, a thin film formation apparatus, a CMP apparatus, a processing apparatus, an aging apparatus, and an inspection apparatus; and
the semiconductor manufacturing apparatus-related apparatus includes at least one selected from the group consisting of a pure water/chemical liquid apparatus, a gas apparatus, a clean room apparatus, and a manufacturing-related apparatus.

25. The semiconductor manufacturing-related apparatus according to claim 24,
wherein the photolithography process apparatus includes at least one selected from the group consisting of a coating apparatus, a resist stripping apparatus, a developing apparatus (developer), and a descumming apparatus;
the thin film formation/etching/cleaning/drying apparatus includes at least one selected from the group consisting of a vacuum deposition apparatus, a cleaning apparatus, a drying apparatus, and a scrub cleaning apparatus;
the inspection/evaluation and manufacturing apparatus is a defect repair apparatus,
the resist processing apparatus includes at least one selected from the group consisting of a coating apparatus, a developing apparatus, a resist stripping apparatus, and an ashing apparatus;
the etching apparatus includes at least one selected from the group consisting of a dry etching apparatus and a wet etching apparatus;
the cleaning/drying apparatus includes at least one selected from the group consisting of a wet cleaning apparatus, a scrub cleaning apparatus, and a drying apparatus;
the CVD apparatus includes at least one selected from the group consisting of a high-pressure CVD apparatus, a SACVD apparatus, a low-pressure CVD apparatus, a plasma CVD apparatus, a metal CVD apparatus, and an ALD apparatus;
the thin film formation apparatus includes at least one selected from the group consisting of a vacuum deposition apparatus, a silicon epitaxial growth apparatus, a compound semiconductor epitaxial apparatus (MOCVD apparatus, MBE apparatus), and a plating apparatus;
the CMP apparatus includes at least one selected from the group consisting of a CMP apparatus and a CMP cleaning apparatus;
the processing apparatus is a bump plating apparatus;
the aging apparatus includes at least one selected from the group consisting of an aging apparatus, a burn-in apparatus, an IC insertion apparatus, and an IC extraction apparatus;
the inspection apparatus is a life test apparatus,
the pure water/chemical liquid apparatus includes at least one selected from the group consisting of a chemical supply apparatus, a slurry supply apparatus, a chemical purification apparatus, and a waste liquid treatment apparatus;
the gas apparatus includes at least one selected from the group consisting of a gas generation apparatus, a gas purification apparatus, a gas mixing apparatus, a gas detection apparatus, and an exhaust gas treatment apparatus;
the clean room apparatus includes at least one selected from the group consisting of a thermal chamber and an environmental test apparatus; and
the manufacturing-related apparatus includes at least one selected from the group consisting of a jig cleaning/drying apparatus, a flow control instrument, a packaging apparatus, and a liquid/gas measuring instrument.
